# EUROPEAN PATENT SPECIFICATION

(11) **EP 0 973 011 B1**
(45) Date of publication and mention of the grant of the patent: **12.03.2008**
(21) Application number: 99305598.7
(22) Date of filing: 14.07.1999
(51) Int. Cl.: G01C 21/20

(54) **Method and apparatus for providing route guidance in a vehicle navigation system**
Verfahren und Vorrichtung zur Routenführung in einem Fahrzeugnavigationssystem
Méthode et dispositif pour fournir de l'information de route dans un système de navigation véhiculaire

(30) Priority: 15.07.1998 US 116161
(43) Date of publication of application: 19.01.2000
(60) Divisional application: 07075065.8
(73) Proprietor: TomTom International B.V., 1017 CT Amsterdam (NL)
(72) Inventor: Kadaba, Sudha G., Cupertino California 95014 (US); White, laura, San Jose, California 95129 (US)
(74) Representative: Denmark, James Christopher

(56) References cited:
- EP-A- 0 579 451
- WO-A-97/31241
- JP-A- 9 034 490
- US-A- 5 177 685
- US-A- 5 544 060
- PATENT ABSTRACTS OF JAPAN vol. 018, no. 159 (P-1711), 16 March 1994 (1994-03-16) & JP 05 332778 A (ZEXEL CORP), 14 December 1993 (1993-12-14)

## Description

The present invention relates to route guidance in the context of a vehicle navigation system. More specifically, methods and apparatus are described, by way of example in illustration of the invention, in which audible route guidance instructions are provided to the user of a vehicle navigation system.

The utility of providing voice guidance in vehicle navigation systems is unquestioned in the industry. This is particularly true where voice guidance reduces the necessity for the driver to make visual contact with the system's display in situations where it may be hazardous to do so, i.e., when the vehicle is in motion. In fact, as speech synthesis and voice recognition technologies mature it is likely that vehicle navigation systems will become increasingly dependent on such technologies for many system functions including, for example, destination selection, route guidance, and even vehicle security.

Most currently available vehicle navigation systems provide some level of voice guidance to the user. For example, a driver might be alerted to an upcoming manoeuvre with a warning "Right turn ahead" or "Next exit on the left" when the vehicle is determined to be within some threshold distance to the manoeuvre. However, given the complexity and uniqueness of each vehicle's circumstances and the wide variety of road topologies, it is currently very difficult to provide voice instructions which describe an upcoming manoeuvre with even a moderate level of precision. That is, for example, systems do not typically identify the road at which the right turn is to be made or the name of the upcoming exit. This is largely due to the fact that vehicle navigation systems typically employ a library of voice instructions, the size of which is kept relatively small to conserve memory and processing resources. Obviously, recording and storing a number of manoeuvres for each street name in a typical map database is not practicable.

JP 05 332778 discloses a system arranged to adjust the volume of a speaker of a navigation device in order to compensate for variations in vehicle engine noise, air conditioning noise, radio noise, and noise produced by an open vehicle window.

US-A-5177685 discloses an automobile navigation system arranged to provide spoken instructions to the driver of an automobile to guide the driver along a route. The system comprises a computing apparatus comprising a map database, route finding algorithms, a vehicle location system, discourse generating programs, and speech generating programs. A user interface allows the driver to enter information such as a desired destination, from which the route finding algorithms in the computer apparatus calculate a route to the destination. The vehicle location system accepts input from a position sensor which measures automobile movement (magnitude and direction) continuously, and using this data in conjunction with the map database, determines the position of the automobile. Based on the current position of the automobile and the route, the discourse generating programs compose driving instructions and other messages according to a discourse model in real time as they are needed. The instructions and messages are sent to voice generating apparatus which conveys them to the driver.

US-A-5544060 discloses a navigation system for a vehicle which enables an operator to know a calculated optimal path from a starting point to a destination before departure. After the optimal path is calculated, a preview function allows the operator to sequentially view the calculated optimal path either prior to departure or at any point along the optimal path. A cancel function allows the operator to cancel a displayed portion of the optimal path and to request calculation and display of an alternate optimal path which does not employ the canceled portion of the original optimal path.

Features of voice guidance techniques to be described below by way of example in illustration of the invention are that they provide a greater level of detail with regard to upcoming manoeuvres than previously proposed arrangements without degrading overall system performance, and enable a user to use a system more effectively. For example, the effect of only presenting manoeuvre instructions as the vehicle approaches an associated manoeuvre may not prove to be sufficient to provide a desirable level of comfort for some users, and the provision of means for minimising this problem as well as the problem caused by variations in background noise which affect a user's ability to hear instructions as they are given is desirable.

Methods and apparatus to be described below, by way of example in illustration of the invention enable voice guidance to be given to the driver of a vehicle using a navigation system in which the driver's dependency on the system's visual display is reduced.

According to an aspect of the present invention, there is provided a method according to claim 19.

According to another aspect of the present invention, there is provided a vehicle navigation system according to claim 1.

The street name associated with each manoeuvre is included in the audio representation which is communicated to the user. For each instruction, the system determines the street name and then constructs an audio representation of the street name using voice synthesis techniques. The synthesized audio representation is then incorporated with generic prerecorded instruction components, e.g., "right turn ahead at", to generate an appropriate manoeuvre instruction. This has the great advantage of identifying the upcoming manoeuvre with greater particularity, therefore further reducing the user's dependence on the visual display. In addition, this arrangement obviates the need to store an audio representation for every street name in the map database, a currently impracticable solution.

The following description and drawings disclose, by means of examples, the invention which is characterised in the appended claims, whose terms determine the extent of the protection conferred hereby.

In the drawings:-
Fig. 1 is a block schematic diagram for use in describing a vehicle navigation system,
Fig. 2 is a flowchart for use in describing the operation of a vehicle navigation system.
Fig. 3 is a flowchart for use in describing an aspect of a method of operation of a vehicle navigation system in accordance within an embodiment of the present invention,
Fig. 4 is a flowchart for use in describing a method of operation of a vehicle navigation system,
Fig. 5 is a flowchart for use in describing an aspect of a method of operation of a vehicle navigation system in accordance with an embodiment of the present invention.

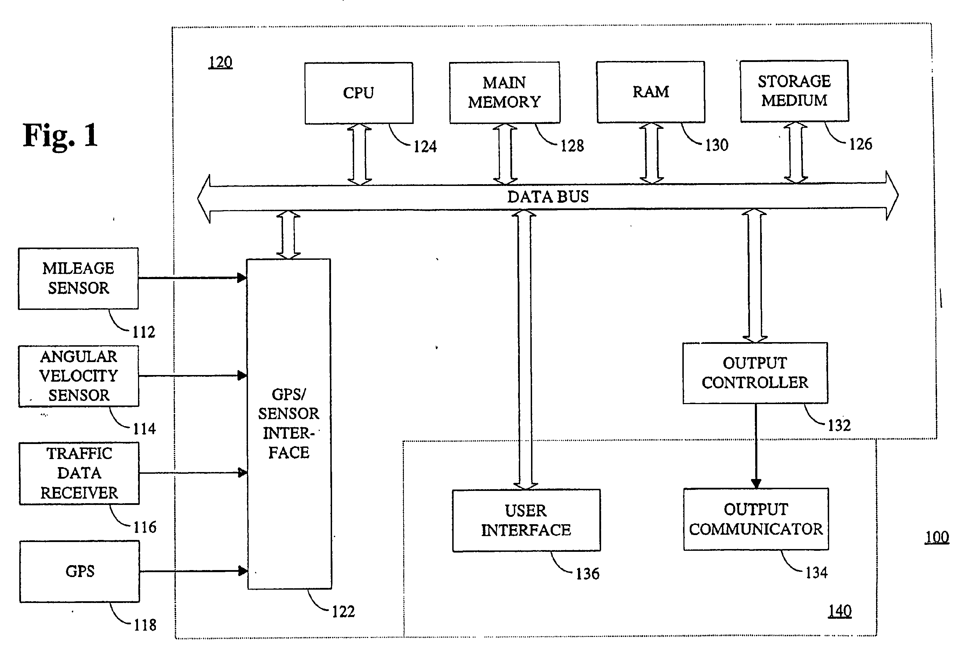

Fig. 1 is a block schematic diagram of a specific vehicle navigation system 100 which is suitable for use in carrying out the present invention. Sensors 112 and 114, traffic data receiver 116, and GPS receiver 118 are coupled to computing means 120 through sensor/GPS interface 122. In typical embodiments, the mileage sensor 112 includes an odometer, and the angular velocity sensor 114 includes a gyroscope, or a differential odometer coupled to the wheels of a vehicle. The traffic data receiver 116 may include any of a wide variety of RF receivers which are operable to receive real time traffic data transmitted in a variety of formats. A global positioning system (GPS) data receiver 118 is provided for receiving signals from, for example, a satellite-based navigation system. Data from sensor/GPS interface 122 is transmitted to a CPU 124, which performs calibration, signal processing, dead-reckoning, vehicle positioning, and route calculation and guidance functions. A database containing map information may be stored in a database medium 126, with software directing the operation of computing means 120 stored in a main memory 128 for execution by the CPU 124. Various arrangements for use in illustrating the present invention are embodied as such software. The memory 128 may include any of a wide variety of non-volatile memories, such as, for example, a read-only memory (ROM), a reprogrammable non-volatile memory such as flash memory, or an SRAM, a CD ROM, an optical disk, or PCMCIA cards. A system RAM 130 permits the reading and writing of the information necessary to execute such software programs. The database medium 126 may include a non-volatile memory, a hard disk drive, a CD-ROM, or an integrated circuit in which digitized map information has been stored. An output controller 132, which may include a graphics controller, receives data processed by the CPU 124 and transmits the data to a display console 140 which includes an output communicator 134, usually including a display screen with associated audio electronics and speakers. The user may input data, such as a desired destination, through a user interface 136, typically a keyboard. Alternatively, the user interface 136 may be a microphone coupled to speech recognition circuitry allowing a user to communicate with the system using voice commands.

The map database stored in the database medium 126 preferably includes positional data such as, for example, latitude and longitude coordinates, to describe road intersections or nodes, road segments, landmarks and points of interest, and other geographical information. The database may further include data representing characteristics of roads or places on the map, such as road and place names, road features such as dividers, one-way restrictions, surface, speed limit, shape, elevation, and other properties. In specific arrangements to be described by way of example in illustration of the invention, the map database includes cost values associated with individual nodes and road segments. These cost values correspond to the estimates of time intervals for traversing the respective node or segment. Node cost values take into consideration such information as, for example, whether the vehicle would encounter oncoming traffic, thus delaying a left turn manoeuvre. Segment costs reflect road segment characteristics such as speed limit and segment length, both of which affect the travel time along the segment. Also associated with each road in the map database is a hierarchy value which relates to the category or type of the road. For example, the highest level category of the hierarchy includes freeways and expressways. The lowest level includes residential streets and/or alleys. The information stored in the map database medium 126 is employed with the data received from the interface 122 for route calculation and guidance.

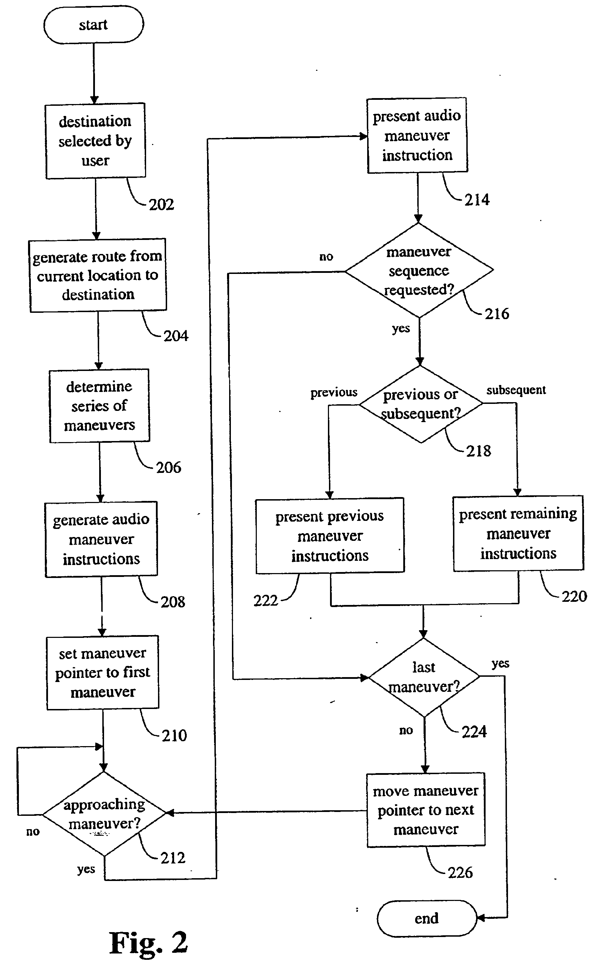

Fig. 2 is a flowchart for use in illustrating the operation of an example in which a user of the system can request that the system should present a sequence of manoeuvre instructions at any point during navigation on a generated route. The sequence can be all previously presented instructions up to the current vehicle position, or all remaining instructions from the current vehicle position to the final manoeuvre. Upon the selection of a destination by the user 202, a route is generated from the current location of the vehicle to the destination 204 according to any of a wide variety of route generation techniques. In one particular example, the route is generated according to techniques described in commonly assigned, copending U.S. patent Application No. 08/784,204 for ROUTE GENERATION IN A VEHICLE NAVIGATION SYSTEM filed on January 15, 1997, a continuation-in-part of U.S. Patent No. 5,712,788 for INCREMENTAL ROUTE CALCULATION issued on January 27, 1998.

Once the route has been generated, the system determines a series of manoeuvres that the vehicle will need to execute to stay on the route 206. A manoeuvre instruction is generated for each of the manoeuvres 208 for communication to the user during navigation. In one particular example, the generated instructions include audio representations which are audibly presented over a system speaker. The audio representations are constructed from a library of generic phrases such as, for example, "right turn", "one-half mile ahead", etc. A manoeuvre pointer, or some other suitable mechanism for keeping track of the upcoming manoeuvre, is then set to the first manoeuvre 210. If the vehicle is approaching the upcoming manoeuvre 212, i.e., is within some threshold distance of the manoeuvre, the associated manoeuvre instruction is presented to the user 214. That is, in the particular arrangement described above, the audio representation of the manoeuvre instruction is presented over the system speaker. In various examples , the mileage to the upcoming manoeuvre is indicated in the instruction.

If at any time during navigation the user would like more than one of the instructions to be presented, the actuation of a soft key in the user interface 216 causes the system to present a sequence of instructions. If the user has indicated that the remaining manoeuvre instructions are desired 218, the system presents all remaining manoeuvre instructions from the upcoming manoeuvre (i.e., the current pointer location) to the final manoeuvre on the route 220. If, on the other hand, the user has indicated that previous instructions are desired 218, the system presents all previous instructions from the first manoeuvre to the most recently presented manoeuvre 222.

The user may take advantage of this feature at any point after the manoeuvre instructions have been generated. That is, even before the vehicle embarks on the generated route, the user may request an audio presentation of the remaining manoeuvre instructions, i.e., the entire set of manoeuvre instructions. For example, in one specific illustrative example, once they have been generated, all of the manoeuvre instructions for the generated route are visually presented in a graphical user interface (GUI) on the system's display screen. The GUI includes information for each manoeuvre such as, for example, a manoeuvre icon representing the manoeuvre, the road name at which the manoeuvre is to occur, and the distance from the previous manoeuvre. At this point, the user may request an audio presentation of the entire set of manoeuvre instructions by the actuation of a soft key or by the issuance of a verbal command.

If the last manoeuvre instruction for the route has not been presented 224, the manoeuvre pointer is advanced to the next manoeuvre 226 and the process repeats from 212. If the last manoeuvre has been presented the process ends.

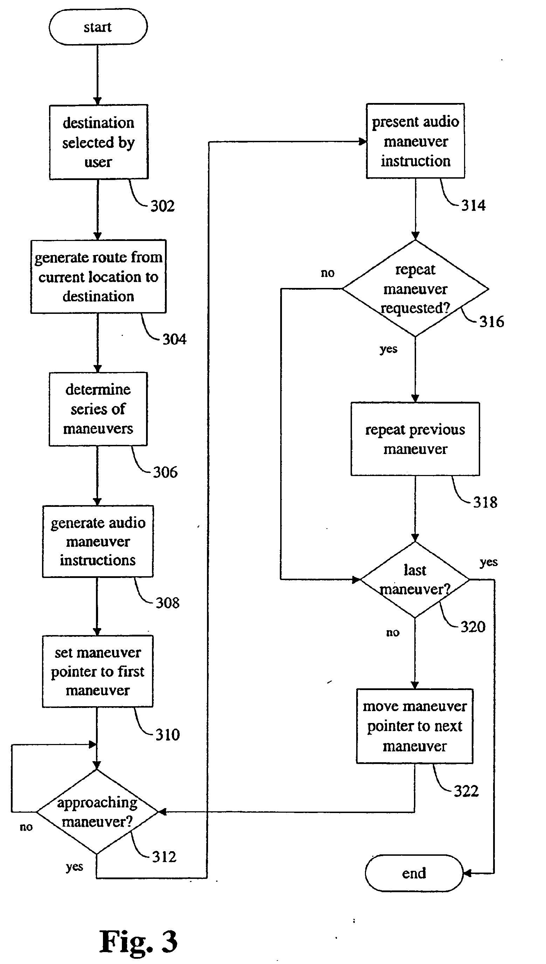

Fig. 3 is a flowchart for use in describing an aspect of an embodiment of the present invention. In this aspect the user can request that the system repeat the most recently presented manoeuvre instruction at any point during navigation. Upon the selection of a destination by the user 302, a route is generated from the current location of the vehicle to the destination 304, according to any of a wide variety of route generation techniques, as discussed above. Once the route has been generated, the system determines a series of manoeuvres that the vehicle will need to execute to stay on the route 306. A manoeuvre instruction is generated for each of the manoeuvres 308 for communication to the user during navigation. A manoeuvre pointer or some other suitable mechanism for keeping track of the upcoming manoeuvre is then set to the first manoeuvre 310. If the vehicle is approaching the upcoming manoeuvre 312, i.e., is within some threshold distance of the manoeuvre, the associated manoeuvre instruction is presented to the user 314.

If at any time during navigation the user would like the most recent manoeuvre instruction to be repeated, the actuation of a soft key in the user interface 316 causes the system to repeat the most recently presented manoeuvre instruction 318. The mileage to the upcoming manoeuvre is adjusted to reflect any change in the vehicle's position. Thus, if the previous instruction had indicated that the manoeuvre in a country where distance is measure in miles was to be executed in 0.5 miles and the vehicle has travelled 0.2 miles since the instruction was presented, the repeated instruction indicates that the manoeuvre is to be executed in 0.3 miles. This arrangement employs 0.1 mile increments. Other arrangements may employ greater or lesser sensitivity or employ other terms of linear measurement. If the last manoeuvre instruction for the route has not been presented 320, the manoeuvre pointer is advanced to the next manoeuvre 322 and the process repeats from 312. If the last manoeuvre has been presented the process ends.

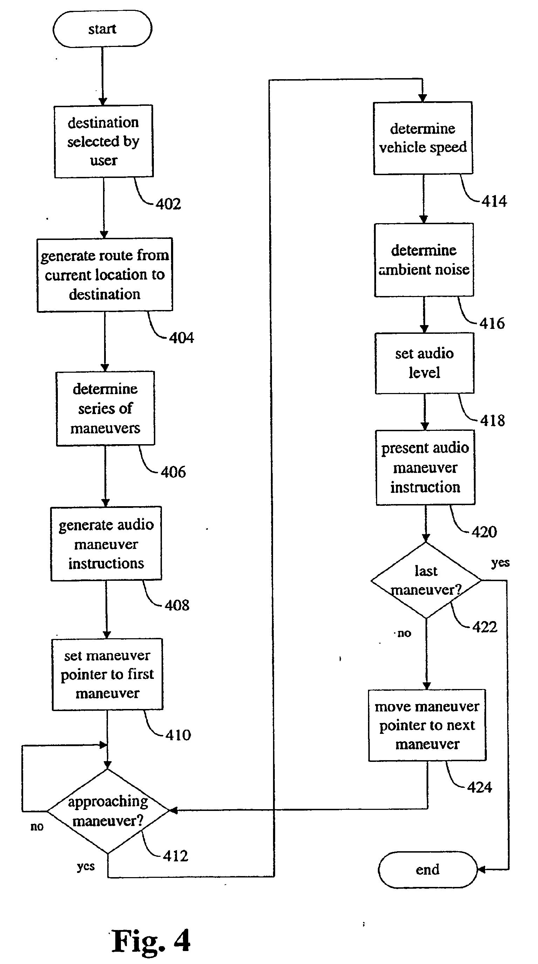

Fig. 4 is a flowchart for use in describing yet another illustrative example. In this illustrative example, the audio level for manoeuvre instructions is adjusted in response to the vehicle speed and/or to the ambient noise level. Upon the selection of a destination by the user 402, a route is generated from the current location of the vehicle to the destination 404, according to any of a wide variety of route generation techniques as discussed above. Once the route has been generated, the system determines a series of manoeuvres that the vehicle will need to execute to stay on the route 406. A manoeuvre instruction is generated for each of the manoeuvres 408 for communication to the user during navigation. A manoeuvre pointer, or some other suitable mechanism for keeping track of the upcoming manoeuvre, is then set to the first manoeuvre 410. If the vehicle is approaching an upcoming manoeuvre 412, i.e., it is within some threshold distance of the manoeuvre, the vehicle speed 414 and the ambient noise level 416 are determined and the audio level is set to an appropriate level for the background noise 418. Thus, for each manoeuvre instruction, the audio level either remains unchanged, is adjusted up, or is adjusted down based on the vehicle speed and/or the ambient noise level. The determination of the ambient noise may be accomplished using any of a variety of sound capture techniques and is well within the capabilities of one of skill in the art. The manoeuvre instruction associated with the upcoming manoeuvre is then presented 420. If the last manoeuvre instruction for the route has not been presented 422, the manoeuvre pointer is advanced to the next manoeuvre 424 and the process repeats from 412. If the last manoeuvre has been presented the process ends.

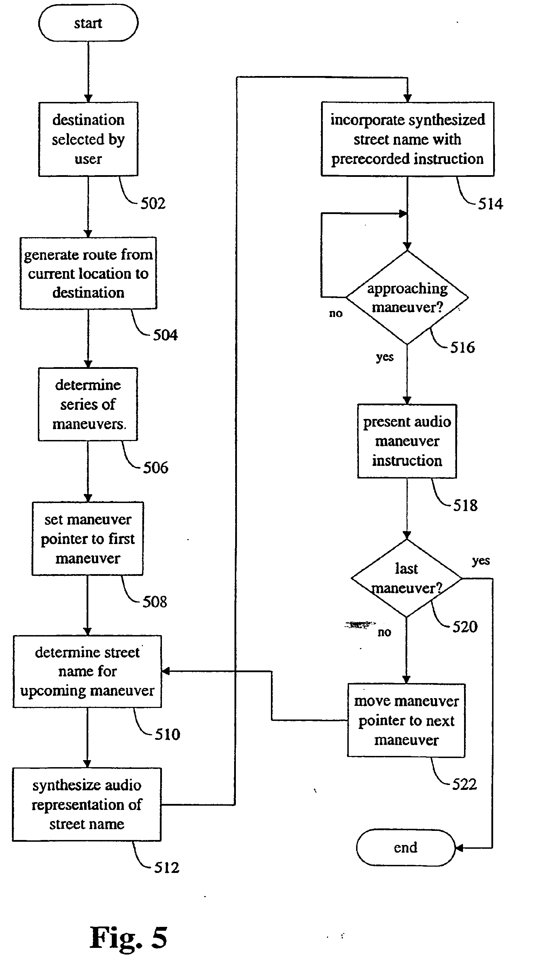

Fig. 5 is a flowchart for use in describing an aspect of an embodiment of the present invention. In this arrangement, enhanced audio manoeuvre instructions are generated and presented which include the name of the street at which the upcoming manoeuvre takes place. Upon the selection of a destination by the user 502, a route is generated from the current location of the vehicle to the destination 504 according to any of a wide variety of route generation techniques, as discussed above. Once the route has been generated, the system determines a series of manoeuvres that the vehicle will need to execute to stay on the route 506. A manoeuvre pointer or some other suitable mechanism for keeping track of the upcoming manoeuvre is then set to the first manoeuvre 508. The street name for the upcoming manoeuvre is then determined using information about the route and the current vehicle position 510. An audio representation of the street name is then synthesized using any of a variety of speech synthesis techniques 512. The synthesized street name is then incorporated, with appropriate pre-recorded generic instruction elements from the system's library into a manoeuvre instruction 514. In some illustrative arrangements, these generic instruction elements include mileage indicators, e.g., "0.5 miles ahead". Once the vehicle has reached a threshold distance from the upcoming manoeuvre 516 the audio representation of the associated instruction is presented 518. If the last manoeuvre instruction for the route has not been presented 520, the manoeuvre pointer is advanced to the next manoeuvre 522 and the process repeats from 510. If the last manoeuvre has been presented the process ends.

Although a particular arrangement has been described, by way of example in illustration of the invention, variations and modifications thereof, as well as other arrangements may be conceived within the scope of the appended claims.

For example, access to the features described herein may be implemented in a variety of ways. That is, the actuation of a soft key is merely one way in which a user may get the system to repeat a previous instruction or to present a series of manoeuvres. Other methods could include the use of voice recognition technology enabling the user to make verbal requests.

## Claims

1. A vehicle navigation system (100) for use in a vehicle, the system comprising:
sensing means (112, 114, 116, 118) for generating data for use by the vehicle navigation system (100) for navigation;
a user interface (134, 136) for communicating with a user of the vehicle navigation system (100), and
a central processing unit (120) which is operable to:
generate a route from a first position to a destination in response to the selection of the destination by the user, the route including a plurality of manoeuvres;
generate a plurality of manoeuvre instructions corresponding to said plurality of manoeuvres, selected ones of said manoeuvre instructions being associated with a street name having alphanumeric characters and an indication of a distance to the corresponding manoeuvre;
present an audio representation of each of the manoeuvre instructions to the user prior to the execution of a corresponding one of the manoeuvres, wherein the audio representation of the selected manoeuvre instructions includes the associated street name and the distance indication;
include, in response to a request received from a user to repeat a most recently presented manoeuvre instruction that includes a street name and a distance indication, an adjusted distance indication of the distance to the manoeuvre that corresponds to said previously presented manoeuvre instruction;
generate a repeat manoeuvre instruction comprising said previously presented manoeuvre instruction, said previously presented street name and said adjusted distance indication, and
present an audio representation of said repeat manoeuvre instruction to said user.

2. A system according to Claim 1, wherein said distance indication for said selected manoeuvre instruction comprises the distance to the corresponding manoeuvre from a previous location in said route.

3. A system according to Claim 2, wherein said distance indication comprises the distance to the corresponding manoeuvre from a location on said route immediately preceding the manoeuvre associated with said selected manoeuvre instruction.

4. A system according to any of Claims 1 to 3, wherein said adjusted distance indication comprises a distance between a current position of the vehicle and the manoeuvre associated with said most recently presented manoeuvre instruction.

5. A system according to Claim 4, wherein said current vehicle position is determined by measuring a distance travelled by said vehicle since said most recently presented manoeuvre instruction.

6. A system according to Claim 4 and 5, wherein said adjusted distance indication is included by subtracting the distance travelled from the distance to the manoeuvre corresponding to said most recently presented manoeuvre instruction.

7. A system according to any preceding claim, wherein said audio representations of said street names are synthesised using voice synthesis techniques.

8. A system according to Claim 7, wherein said audio representations of manoeuvre instructions comprise synthesised street names and prerecorded instruction components.

9. A system according to any preceding claim, comprising means for determining a level of ambient noise within the vehicle, said central processing unit being configured to adjust an output volume of said audio presentation to compensate for ambient noise within said vehicle.

10. A system according to any of claims 1 to 8, comprising means for determining vehicle speed, said central processing unit being configured to adjust an output volume of said audio presentation in accordance with said determined vehicle speed.

11. A system according to Claims 9 and 10, wherein said central processing unit is configured to adjust the output volume of said audio presentation based on determined vehicle speed and ambient noise levels.

12. A system according to any of Claims 9 to 11, wherein said central processing unit is configured to adjust said output volume by increasing or decreasing said output volume.

13. A system according to any preceding claim, wherein said central processing unit is configured, in response to a request input by the user, to sequentially present all remaining manoeuvre instructions for said route.

14. A system according to any preceding claim, wherein said central processing unit is configured, in response to a request input by the user, to sequentially present all previous manoeuvre instructions for said route.

15. A system according to any preceding claim, comprising a switch operable by a user to input requests to said navigation system.

16. A system according to Claim 15, wherein said switch comprises a key.

17. A system according to Claim 16, wherein said key comprises a soft key.

18. A system according to any preceding claim, comprising a microphone and speech recognition circuitry for enabling a user to input voice requests to said system.

19. A method for providing route guidance to a user of a vehicle navigation system (100), the method comprising:
generating a route from a first position to a destination in response to the selection of the destination by the user, the route including a plurality of manoeuvres,
generating a plurality of manoeuvre instructions corresponding to said plurality of manoeuvres, selected ones of said manoeuvre instructions being associated with a street name having alphanumeric characters and an indication of a distance to the corresponding manoeuvre;
presenting an audio representation of each of the manoeuvre instructions to the user prior to the execution of a corresponding one of the manoeuvres, wherein the audio representation of the selected manoeuvre instructions includes the associated street name and the distance indication;
including, in response to a request received from a user to repeat a most recently presented manoeuvre instruction that includes a street name and a distance indication, an adjusted distance indication of the distance to the manoeuvre that corresponds to said previously presented manoeuvre instruction;
generating a repeat manoeuvre instruction comprising said previously presented manoeuvre instruction, said previously presented street name and said adjusted distance indication, and
presenting an audio representation of said repeat manoeuvre instruction to said user.

## Patentansprüche

1. Ein Fahrzeugnavigationssystem (100) zur Nutzung in einem Fahrzeug, Folgendes umfassend:
Sensormittel (112, 114, 116, 118) zum Erzeugen von Daten zur Nutzung durch das Fahrzeugnavigationssystem (100) zu Navigationszwecken;
eine Benutzerschnittstelle (134, 136) zum Kommunizieren mit einem Benutzer des Fahrzeugnavigationssystems (100); und
einen Zentralprozessor (120), der Folgendes ausführen kann:
Festlegen einer Route von einer ersten Position zu einem Ziel als Reaktion auf die Wahl des Ziels durch den Benutzer, wobei diese Route eine Anzahl von Manövern beinhaltet;
Erzeugen einer Anzahl von Manöveranweisungen, die zu der besagten Anzahl von Manövern korrespondieren, wobei bestimmten der besagten Manöveranweisungen ein alfanumerische Zeichen enthaltender Straßenname und eine Angabe einer Entfernung bis zu dem betreffenden Manöver zugeordnet ist;
Wiedergeben einer Audiorepräsentation jeder der Manöveranweisungen vor dem Ausführen eines dazu korrespondierenden Manövers, wobei die Audiorepräsentation der ausgewählten Manöveranweisungen den zugehörigen Straßennamen und die zugehörige Entfernungsangabe enthält;
Einfügen - in Reaktion auf eine von einem Benutzer empfangene Anforderung zum Wiederholen der zuletzt präsentierten Manöveranweisung, die einen Straßennamen und eine Entfernungsangabe enthält - einer angepassten Entfernungsangabe der Entfernung zu dem Manöver, das zu der besagten, früher präsentierten Manöveranweisung korrespondiert;
Erzeugen einer wiederholten Manöveranweisung, die die besagte, früher präsentierte Manöveranweisung, den besagten, früher präsentierten Straßennamen und die besagte angepasste Entfernungsangabe enthält; und
Wiedergeben einer Audiorepräsentation der besagten wiederholten Manöveranweisung vor dem besagten Benutzer.

2. Ein System nach Anspruch 1, wobei die besagte Entfernungsangabe für die besagte ausgewählte Manöveranweisung die Entfernung zu dem zugehörigen Manöver von einem früheren Punkt auf der besagten Route aus enthält.

3. Ein System nach Anspruch 2, wobei die besagte Entfernungsangabe die Entfernung zu dem korrespondierenden Manöver von einem Ort auf der besagten Route aus enthält, der unmittelbar vor dem mit der besagten ausgewählten Manöveranweisung korrespondierenden Manöver liegt.

4. Ein System nach einem beliebigen der Ansprüche 1 bis 3, wobei die besagte angepasste Entfernungsangabe eine Entfernung zwischen einer momentanen Position des Fahrzeugs und dem zu der besagten, zuletzt präsentierten Manöveranweisung gehörenden Manöver enthält.

5. Ein System nach Anspruch 4, wobei die besagte momentane Fahrzeugposition durch Messen einer von dem besagten Fahrzeug seit der besagten, zuletzt präsentierten Manöveranweisung zurückgelegten Strecke ermittelt wird.

6. Ein System nach den Ansprüchen 4 und 5, wobei die besagte angepasste Entfernungsangabe eingefügt wird durch Subtrahieren der zurückgelegten Strecke von der Entfernung bis zu dem Manöver, das mit der besagten, zuletzt präsentierten Manöveranweisung korrespondiert.

7. Ein System nach einem beliebigen der vorstehenden Ansprüche, wobei die besagten Audiorepräsentationen der besagten Straßennamen mithilfe von Sprachsynthesetechniken synthetisiert werden.

8. Ein System nach Anspruch 7, wobei die besagten Audiorepräsentationen von Manöveranweisungen synthetisierte Straßennamen und vorab aufgezeichnete Anweisungskomponenten enthalten.

9. Ein System nach einem beliebigen der vorstehenden Ansprüche, enthaltend ein Mittel zum Ermitteln eines durchschnittlichen Umgebungsgeräuschpegels im Fahrzeuginneren, wobei der besagte Zentralprozessor dafür eingerichtet ist, einen Ausgangslautstärkepegel der besagten Audiopräsentation so anzupassen, dass das Umgebungsgeräusch im besagten Fahrzeug kompensiert wird.

10. Ein System nach einem beliebigen der Ansprüche 1 bis 8, enthaltend ein Mittel zum Ermitteln der Fahrzeuggeschwindigkeit, wobei der besagte Zentralprozessor dafür eingerichtet ist, einen Ausgangslautstärkepegel der besagten Audiopräsentation entsprechend der besagten, ermittelten Fahrzeuggeschwindigkeit anzupassen.

11. Ein System nach den Ansprüchen 9 und 10, wobei der besagte Zentralprozessor dafür eingerichtet ist, den Ausgangslautstärkepegel der besagten Audiopräsentation entsprechend der ermittelten Fahrzeuggeschwindigkeit und der Umgebungsgeräuschpegel anzupassen.

12. Ein System nach einem beliebigen der Ansprüche 9 bis 11, wobei der besagte Zentralprozessor dafür eingerichtet ist, den besagten Ausgangspegel durch Erhöhen oder Verringern des besagten Ausgangspegels anzupassen.

13. Ein System nach einem beliebigen der vorstehenden Ansprüche, wobei der besagte Zentralprozessor dafür eingerichtet ist, in Reaktion auf eine Anforderungseingabe des Benutzers der Reihe nach alle verbleibenden Manöveranweisungen für die besagte Route zu präsentieren.

14. Ein System nach einem beliebigen der vorstehenden Ansprüche, wobei der besagte Zentralprozessor dafür eingerichtet ist, in Reaktion auf eine Anforderungseingabe des Benutzers der Reihe nach alle früheren Manöveranweisungen für die besagte Route zu präsentieren.

15. Ein System nach einem beliebigen der vorstehenden Ansprüche, enthaltend einen vom Benutzer bedienbaren Schalter zum Eingeben von Anforderungen an das besagte Navigationssystem.

16. Ein System nach Anspruch 15, wobei der besagte Schalter einen Schlüssel enthält.

17. Ein System nach Anspruch 16, wobei der besagte Schlüssel einen Softkey enthält.

18. Ein System nach einem beliebigen der vorstehenden Ansprüche, enthaltend ein Mikrofon und eine Spracherkennungsschaltung, womit der Benutzer per Sprache Anforderungen an das besagte System eingeben kann.

19. Ein Verfahren, den Benutzer eines Fahrzeugnavigationssystems (100) auf einer Route zu leiten, wobei dieses Verfahren Folgendes umfasst:
Festlegen einer Route von einer ersten Position zu einem Ziel als Reaktion auf die Wahl des Ziels durch den Benutzer, wobei diese Route eine Anzahl von Manövern beinhaltet;
Erzeugen einer Anzahl von Manöveranweisungen, die zu der besagten Anzahl von Manövern korrespondieren, wobei bestimmten der besagten Manöveranweisungen ein alfanumerische Zeichen enthaltender Straßenname und eine Angabe einer Entfernung bis zu dem betreffenden Manöver zugeordnet ist;
Wiedergeben einer Audiorepräsentation jeder der Manöveranweisungen vor dem Ausführen eines dazu korrespondierenden Manövers, wobei die Audiorepräsentation der ausgewählten Manöveranweisungen den zugehörigen Straßennamen und die zugehörige Entfernungsangabe enthält;
Einfügen - in Reaktion auf eine von einem Benutzer empfangene Anforderung zum Wiederholen der zuletzt präsentierten Manöveranweisung, die einen Straßennamen und eine Entfernungsangabe enthält - einer angepassten Entfernungsangabe der Entfernung zu dem Manöver, das zu der besagten, früher präsentierten Manöveranweisung korrespondiert;
Erzeugen einer wiederholten Manöveranweisung, die die besagte, früher präsentierte Manöveranweisung, den besagten, früher präsentierten Straßennamen und die besagte angepasste Entfernungsangabe enthält; und
Wiedergeben einer Audiorepräsentation der besagten wiederholten Manöveranweisung vor dem besagten Benutzer.

## Revendications

1. Système de navigation véhiculaire (100) pour utilisation dans un véhicule, le système comprenant :
un moyen de détection (112, 114, 116, 118) pour générer des données pour utilisation par le système de navigation véhiculaire (100) pour la navigation ;
une interface utilisateur (134, 136) pour communiquer avec un utilisateur du système de navigation véhiculaire (100), et
une unité centrale de traitement (120) qui est utilisable pour :
générer un itinéraire d'une première position à une destination en réponse au choix de la destination par l'utilisateur, l'itinéraire comprenant une pluralité de manoeuvres ;
générer une pluralité d'instructions de manoeuvre correspondant à ladite pluralité de manoeuvres, certaines sélectionnées parmi lesdites instructions de manoeuvre étant associées à un nom de rue ayant des caractères alphanumériques et une indication d'une distance à la manoeuvre correspondante ;
présenter une représentation audio de chacune des instructions de manoeuvre à l'utilisateur avant l'exécution d'une correspondante des manoeuvres, dans laquelle la représentation audio des instructions de manoeuvre sélectionnées comprend le nom de rue et l'indication de distance associés;
inclure, en réponse à une demande reçue d'un utilisateur de répéter une instruction de manoeuvre présentée en dernier qui comprend un nom de rue et une indication de distance, une indication de distance ajustée de la distance à la manoeuvre qui correspond à ladite instruction de manoeuvre présentée précédemment ;
générer une instruction de répétition de manoeuvre comprenant ladite instruction de manoeuvre présentée précédemment, ledit nom de rue et ladite indication de distance ajustée présentés précédemment, et
présenter une représentation audio de ladite instruction de répétition de manoeuvre audit utilisateur.

2. Système selon la revendication 1, dans lequel ladite indication de distance pour ladite instruction de manoeuvre sélectionnée comprend la distance à la manoeuvre correspondante par rapport à un emplacement précédent dans ledit itinéraire.

3. Système selon la revendication 2, dans lequel ladite indication de distance comprend la distance à la manoeuvre correspondante par rapport à un emplacement sur ledit itinéraire précédant immédiatement la manoeuvre associée à ladite instruction de manoeuvre sélectionnée.

4. Système selon l'une quelconque des revendications 1 à 3, dans lequel ladite indication de distance comprend une distance entre une position en cours du véhicule et la manoeuvre associée à ladite instruction de manoeuvre présentée en dernier.

5. Système selon la revendication 4, dans lequel ladite position de véhicule en cours est déterminée en mesurant une distance parcourue par ledit véhicule depuis l'instruction de manoeuvre présentée en dernier.

6. Système selon la revendication 4 et 5, dans lequel ladite indication de distance ajustée est incluse en soustrayant la distance parcourue de la distance à la manoeuvre correspondant à ladite instruction de manoeuvre présentée en dernier.

7. Système selon l'une quelconque des revendications précédentes, dans lequel lesdites représentations audio desdits noms de rue sont synthétisées à l'aide de techniques de synthèse vocale.

8. Système selon la revendication 7, dans lequel lesdites représentations audio d'instructions de manoeuvre comprennent des noms de rue synthétisés et des composants d'instruction préenregistrés.

9. Système selon l'une quelconque des revendications précédentes, comprenant des moyens pour déterminer un niveau de bruit ambiant dans le véhicule, ladite unité centrale de traitement étant configurée pour ajuster un volume de sortie de ladite présentation audio pour compenser le bruit ambiant dans ledit véhicule.

10. Système selon l'une quelconque des revendications 1 à 8, comprenant des moyens pour déterminer la vitesse du véhicule, ladite unité centrale de traitement étant configurée pour ajuster un volume de sortie de ladite présentation audio en fonction de ladite vitesse du véhicule déterminée.

11. Système selon les revendications 9 et 10, dans lequel ladite unité centrale de traitement est configurée pour ajuster le volume de sortie de ladite présentation audio sur la base de la vitesse du véhicule déterminée et des niveaux du bruit ambiant.

12. Système selon l'une quelconque des revendications 9 à 11, dans lequel ladite unité centrale de traitement est configurée pour s'adapter audit volume de sortie en augmentant ou en diminuant ledit volume de sortie.

13. Système selon l'une quelconque des revendications précédentes, dans lequel ladite unité centrale de traitement est configurée, en réponse à une demande entrée par l'utilisateur, pour présenter séquentiellement toutes les instructions de manoeuvre restantes pour ledit itinéraire.

14. Système selon l'une quelconque des revendications précédentes, dans lequel ladite unité centrale de traitement est configurée, en réponse à une demande entrée par l'utilisateur, pour présenter séquentiellement toutes les instructions de manoeuvre précédentes pour ledit itinéraire.

15. Système selon l'une quelconque des revendications précédentes, comprenant un commutateur utilisable par un utilisateur pour entrer des demandes audit système de navigation.

16. Système selon la revendication 15, dans lequel ledit commutateur comprend une touche.

17. Système selon la revendication 16, dans lequel ladite touche comprend une touche tactile.

18. Système selon l'une quelconque des revendications précédentes, comprenant un microphone et un circuit de reconnaissance vocale pour permettre à un utilisateur d'entrer des demandes vocales dans ledit système.

19. Procédé pour fournir des conseils d'itinéraire à un utilisateur d'un système de navigation véhiculaire (100), ce procédé comprenant :
la génération d'un itinéraire d'une première position à une destination en réponse au choix de la destination par l'utilisateur, l'itinéraire comprenant une pluralité de manoeuvres ;
la génération d'une pluralité d'instructions de manoeuvre correspondant à ladite pluralité de manoeuvres, certaines sélectionnées parmi lesdites instructions de manoeuvre étant associées à un nom de rue ayant des caractères alphanumériques et une indication d'une distance à la manoeuvre correspondante ;
la présentation d'une représentation audio de chacune des instructions de manoeuvre à l'utilisateur avant l'exécution correspondante des manoeuvres, dans lequel la représentation audio des instructions de manoeuvre sélectionnées comprend le nom de rue associé et l'indication de distance ;
l'inclusion, en réponse à une demande reçue d'un utilisateur de répéter une instruction de manoeuvre présentée en dernier qui comprend un nom de rue et une indication de distance, d'une indication de distance ajustée de la distance à la manoeuvre qui correspond à ladite instruction de manoeuvre présentée précédemment ;
la génération d'une instruction de répétition de manoeuvre comprenant ladite instruction de manoeuvre présentée précédemment, ledit nom de rue présenté précédemment et ladite indication de distance ajustée, et
la présentation d'une représentation audio de ladite instruction de manoeuvre de répétition audit utilisateur.
